# EUROPÄISCHE PATENTSCHRIFT

(11) **EP 1 801 001 B1**
(45) Veröffentlichungstag und Bekanntmachung des Hinweises auf die Patenterteilung: **09.02.2011**
(21) Anmeldenummer: 06026590.7
(22) Anmeldetag: 21.12.2006
(51) Int. Cl.: B62D 33/023, B62D 33/04

(54) **Aufbau für einen Anhänger eines Lastkraftwagens und Anhänger eines Lastkraftwagens**
Assembly for a lorry trailer and lorry trailer
Montage pour une remorque de camion et remorque de camion

(30) Priorität: 23.12.2005 DE 102005061963
(43) Veröffentlichungstag der Anmeldung: 27.06.2007
(73) Patentinhaber: Kögel Trailer GmbH & Co. KG, 89349 Burtenbach (DE); Kaiser, Ria, 21077 Hamburg (DE); Lange, Hans Juergen, 21077 Hamburg (DE)
(72) Erfinder: Stempfle, Paul, 89356 Haldenwang (DE); Lima, Joachim, 89601 Schelklingen (DE); Lange, Hans Juergen, 21077 Hamburg (DE); Kaiser, Ria, Dipl.-Ing., 21077 Hamburg (DE)
(74) Vertreter: Meissner, Bolte & Partner

(56) Entgegenhaltungen:
- DE-A1- 2 917 692
- DE-A1- 3 628 171
- DE-U1-202004 002 125
- US-A1- 1 922 027
- US-A1- 2 168 268
- US-A1- 2 355 794
- US-A1- 2 441 106

## Beschreibung

Die Erfindung betrifft einen Aufbau für einen Anhänger eines Lastkraftwagens, insbesondere eines Sattelanhängers, gemäß dem Oberbegriff des Anspruchs 1 sowie einen Anhänger eines Lastkraftwagens.

Anhänger für Lastkraftwagen sind entweder als Sattelanhänger, die auf eine Zugmaschine aufgesattelt werden, oder als Anhänger, die an eine Zugmaschine angehängt werden, ausgebildet.

Sattelanhänger werden üblicherweise auf Zugfahrzeuge aufgesattelt und über Königszapfen (King-pin) mit diesen verbunden. Die Zugfahrzeuge und die Sattelanhänger sind dabei frei untereinander austauschbar. Um dies zu gewährleisten, wurden unterschiedliche Richtlinien ausgegeben, nach denen die Sattelanhänger in ihren Außenmaßen dimensioniert werden. Dabei ist insbesondere zu beachten, dass beim Kurvenfahren das vordere Ende des Sattelanhängers nicht zu weit in den Gegenverkehr hineinragt bzw. nicht zu weit auf einen Bürgersteig oder sich am Straßenrand befindende Hindernisse hineinragt. Daher wurden die Abmessungen des Vorderteils des Sattelanhängers bezüglich des Königszapfens definiert, so dass auch im verschwenkten Zustand des Sattelanhängers gegenüber dem Zugfahrzeug eine Gefährdung anderer Verkehrsteilnehmer verhindert wird und eine Beschädigung des Sattelanhängers und des Zugfahrzeugs verhindert werden kann.

Bei Anhängern, die an ein Zugfahrzeug angehängt werden, sind solche bekannt, bei denen die in Fahrtrichtung vorderen Achsen als Drehgestell ausgebildet sind. Das Drehgestell ist um eine vertikal liegende Drehachse bezüglich des restlichen Fahrgestells des Anhängers verschwenkbar und ist üblicher Weise über eine Gabeldeichsel mit dem Zugfahrzeug verbunden. Entsprechend steht auch hier ein vorderer Teil des Anhängers über die Drehachse hinaus, der beim Kurvenfahren in den Gegenverkehr hinein bzw. über den Straßenrand hinaus ragen kann.

Für Anhänger sind unterschiedliche Aufbauten üblich, insbesondere Aufbauten, bei denen eine feste Vorderwand vorgesehen ist, die zur Ladungsbegrenzung nach vorne dient. Die Seitenwände eines Anhängers können mit einer Plane verschlossen sein. Weiterhin sind feste Aufbauten üblich, die einen geschlossenen Koffer auf dem Anhänger ausbilden. Andere Aufbauten von Anhängern umfassen Tankkesselvorrichtungen, die auf einem Anhänger angebracht sind, oder Muldenkippervorrichtungen.

Die Aufbauten für einen Anhänger müssen in Fahrtrichtung festgelegte Stabilitätskriterien erfüllen, um beim Bremsen bzw. bei einem Aufprall des Zugs eine Absicherung der Ladung nach vorne sicherzustellen.

Die Beladung von Anhängern von Lastwagen, insbesondere von Sattelanhängern, findet häufig mittels normierter Ladungsträger, insbesondere mittels Paletten oder Containern, statt. Diese Paletten bzw. Container besitzen eine rechteckige Aufstandfläche. Herkömmliche Anhänger weisen daher in ihrem Vorderbereich eine senkrecht zur Fahrtrichtung verlaufende Wand zur Ladungsbegrenzung auf, an der die Paletten bzw. Container abgestützt werden können. Diese ebene Wand zur Ladungsbegrenzung nach vorn weist dabei die erforderlichen Stabilitätskriterien auf. Aufgrund dieser Anforderungen sind solche Wände relativ schwer.

An den ladungsbegrenzenden Vorderwänden herkömmlicher Anhänger sind dabei üblicherweise von außen anzubringende Teile wie beispielsweise Kühlgeräte, Haltevorrichtungen für Kupplungselemente der Druckluft- und Stromversorgung des Anhängers, Feuerlöscher oder Staukästen vorgesehen.

DE 29 17 692 A1 das einen Aufbau nach dem Oberbegriff des Anspruchs 1 offenbart, bezieht sich auf eine Vorrichtung zur Verbesserung der aerodynamischen Eigenschaften eines Fahrzeuganhängers, insbesondere eines Wohnwagens, wobei der im Wesentlichen ebenen Frontwand des Fahrzeuganhängers außen ein symmetrischer windschnittiger Profilkörper vorgesetzt ist, der sich im Wesentlichen über die gesamte Höhe und Breite der Frontwand erstreckt.

US 1,922,027 bezieht sich auf einen Anhängerkörper mit einer einheitlichen Dachstruktur, umfassend einen Dachrahmen, welcher zusammengesetzt ist aus einem umfänglich verlaufenden, integrierten Element welches im Wesentlichen in eine U-Form gebogen ist, und ein Querelement, welches integral mit den jeweiligen Enden des U-förmigen Elements verbunden ist.

DE 36 28 171 A1 bezieht sich auf einen Wohnwagenanhänger, dessen in Fahrtrichtung vorderer Endbereich als sich nach vorn verjüngender Bug ausgebildet ist, wobei der sich in der Breite verjüngende Bug im Wesentlichen die gesamte Höhe des Wohnwagens einnimmt, und wobei in mindestens einer der Bugseitenwände eine mannshohe Eingangstür vorgesehen ist, und der Buginnenraum und der Innenraum des restlichen Wohnwagens miteinander in Verbindung stehen.

Aufgabe der vorliegenden Erfindung ist es, den durch gesetzliche Bestimmungen und internationale Normierungen vorgegebenen Raum besser auszunutzen.

Diese Aufgabe wird durch einen Aufbau für einen Anhänger eines Lastkraftwagens, insbesondere eines Sattelanhängers, gemäß Anspruch 1 gelöst. Demgemäss ist der Aufbau im in Fahrtrichtung vorderen Bereich des Anhängers angeordnet und definiert eine sich senkrecht zur Fahrtrichtung erstreckende Ebene zur Ladungsbegrenzung nach vorne. Erfindungsgemäß ist vor dieser Ebene zur Ladungsbegrenzung eine Vorderwand angeordnet, die zumindest einen gewölbten Bereich aufweist, wobei zwischen der Ebene zur Ladungsbegrenzung und dem gewölbten Bereich der Vorderwand einen Vorraum definiert ist, in dem mindestens ein Aussteifungselement zur Aussteifung der Vorderwand angeordnet ist.

Unter Aufbau wird hier jeglicher Aufbau auf einem Anhänger für einen Lastkraftwagen verstanden, der die Merkmale des Anspruchs 1 umfasst. Der Aufbau kann dabei allein durch diese Merkmale ausgebildet sein und nur ein auf dem Anhänger angeordnetes Element, das sich von vorn bis zur Ebene zur Ladungsbegrenzung erstreckt, ausbilden. Der Aufbau kann aber auch weitere Elemente umfassen, die sich von dem erfindungsgemäßen Aufbau weiter über den gesamten Anhänger hinweg erstrecken. Insbesondere können sich von der Ebene zur Ladungsbegrenzung aus nach hinten hin auf dem Anhänger ein Koffer, ein Planenaufbau, ein Tankkessel, eine Kippermulde oder andere weitere Aufbauteile erstrecken.

Der Aufbau gemäß Anspruch 1 für einen Anhänger verbindet den Vorteil des Ausbildens einer sich senkrecht zur Fahrtrichtung erstreckenden Ebene zur Ladungsbegrenzung, die kompatibel ist mit dem üblicherweise verwendeten Paletten oder Containern, mit einem Vorraum, der zwischen dieser Ebene und der Vorderwand definiert ist. Eine auf diese Weise ausgebildete Vorderwand kann aufgrund des mindestens einen Aussteifungselementes so dimensioniert werden, dass sie den gesetzlichen Normen bzgl. der Ladungssicherheit entspricht und gleichzeitig aufgrund des durch den gewölbten Bereich ausgebildeten Profils mit einem geringeren Gewicht gebaut werden kann, als dem der herkömmliche Vorderwände.

Zusätzlich wird in dem Vorraum ein Volumen geschaffen, in dem Stauraum für Teile wie beispielsweise Ladungssicherungsteile, Jolodaroller oder andere Teile die im Zusammenhang mit der Ladungssicherung und anderen Bereichen des Transportes verwendet werden, vorhanden ist.

Insbesondere können in diesem Vorraum auch Betriebseinrichtungen für den Anhänger eines Lastkraftwagens untergebracht werden. Durch die Geometrie der Vorderwand mit ihrer Wölbung/Profilierung in Verbindung mit dem Aussteifungselement können die einzelnen Teile aus leichteren Materialien gebaut werden, wie beispielsweise kohlefaserverstärkter Kunststoff (CFK) oder glasfaserverstärkter Kunststoff (GFK), wodurch eine signifikante Gewichtseinsparung erreicht werden kann. Die einzelnen Teile können weiterhin auch aus Aluminiumlegierungen, Stahl oder anderen Werkstoffen hergestellt werden, die dann entsprechend weniger schwer ausgelegt werden können und so ebenfalls eine Gewichtsersparnis mit sich bringen.

Bevorzugt ist der gewölbte Bereich konvex ausgebildet. Der gewölbte Bereich kann im Wesentlichen einen Zylinderabschnitt ausbilden, wobei sich die Zylinderachse des Aufbaus im Betriebszustand vertikal erstreckt. Durch eine solche konvexe Form bzw. eine Zylinderabschnittsform kann eine geometrisch einfache Ausprägung der Vorderwand erreicht werden, die, im Falle des Zylinderabschnitts, eine vorgegebene Hüllkurve um einen Königszapfen herum vollständig ausfüllen kann. Eine solche Hüllkurve ist beispielsweise durch die ISO 1726 vorgegeben.

Der gewölbte Bereich kann in einer weiteren Ausführungsform weiterhin mehrere Flächen aufweisen. Die Flächen können dabei beliebige Formen ausbilden und insbesondere auch gebogen oder wellenförmig ausgebildet sein. Mindestens eine der Flächen kann auch als ebene Fläche ausgebildet sein. Durch eine solche Ausbildung lässt sich auf eine einfache Weise eine vorgegebene Hüllkurve approximieren, indem unterschiedliche Flächen, insbesondere ebene Flächen, gebogene Flächen oder wellenförmige Flächen, zusammengesetzt werden. Dabei ist zu beachten, dass die vorgegebene Hüllkurve nicht überschritten wird. Hierdurch können die Produktionskosten weiter verringert werden.

In einer bevorzugten Variante erstreckt sich der gewölbte Bereich über die gesamte Höhe des Aufbaus hinweg. Hierdurch wird eine maximale Ausnutzung des möglichen Volumens sowohl durch Ausnutung der maximal erlaubten Hüllkurve als auch durch Ausnutzung der maximal erlaubten Höhe erreicht. Der gewölbte Bereich kann jedoch auch nur in einem Abschnitt der Vorderwand vorgesehen sein um beispielsweise nur in diesem Abschnitt Staumöglichkeiten bereitzustellen und eine verbesserte Steifigkeit der Vorderwand bereit zu stellen. Die beschriebenen unterschiedlichen geometrischen Varianten der Vorderwand können dabei an die jeweiligen Notwendigkeiten angeglichen werden und beispielsweise Außenanbauten an den Aufbau berücksichtigen oder besondere Belastungsbereiche der Vorderwand durch spezifische Ladungstypen.

Gemäß einem Ausführungsbeispiel der Erfindung ist die Außenseite der Vorderwand um höchstens einen definierten Radius von einer sich durch die Mitte eines Königszapfens, Zugsattelzapfens und/oder Drehgestellachse erstreckenden Achse entfernt. Insbesondere ist der Radius 2040 mm. In besonderen Ausprägungen, insbesondere beim Vorliegen von Ausnahmegenehmigungen, kann dieser Radius aber auch andere, insbesondere größere, Werte annehmen. Durch diese Ausprägung kann erreicht werden, dass die Dimensionierung des Aufbaus und insbesondere der Vorderwand innerhalb vorgeschriebener Normen liegt.

Bevorzugt erstreckt sich der gewölbte Bereich der Vorderwand von einer Seitenwand des Anhängers zu dessen anderer Seitenwand. Hierdurch kann ebenso der gesamte erlaubte Bereich sowohl zum Zwecke der Aussteifung der Vorderwand, als auch zum Bereitstellen eines Vorraums ausgenutzt werden.

Bevorzugt weist die Vorderwand mindestens eine Öffnung zum Zugang zum Vorraum auf. Hierdurch kann der Vorraum auch von der Außenseite des Aufbaus aus zugänglich gemacht werden, so dass die im Vorraum gelagerten Teile entnommen werden können oder im Vorraum aufgenommenen Betriebsvorrichtungen bedient und gewartet werden können.

In einer vorteilhaften Variante des Aufbaus ist in dem gewölbten Bereich mindestens eine Mulde zum Aufnehmen von Betriebsvorrichtungen insbesondere von Druckluftanschlüssen, Stromanschlüssen und/oder Feuerlöschern vorgesehen. Hierdurch kann erreicht werden, dass auf der Außenseite der Vorderwand Betriebsvorrichtungen aufgenommen werden können, die sich ebenfalls nicht über eine vorgegebene Hüllkurve hinaus erstrecken.

In einer besonders bevorzugten Variante der Erfindung ist der Aufbau so dimensioniert, dass er eine Ladungssicherheit gemäß EN ISO 12642 XL gewährleistet. Hierdurch wird eine hohe Ladungssicherheit gewährleistet, die mit den vorgegebenen Normen übereinstimmt.

Bevorzugt ist mindestens eines der Aussteifungselemente fest mit der Vorderwand verbunden, um zusammen mit der Vorderwand eine einheitliche Struktur auszubilden, welche die Ladungssicherheit gewährleistet. In einer Variante kann mindestens eines der Aussteifungselemente mit der Vorderwand fest verriegelbar ausgebildet sein. Durch die feste Verriegelung wird die Aussteifungsfunktion der Aussteifungselemente sicher gestellt, die Aussteifungselemente können jedoch an unterschiedlichen Positionen innerhalb des Vorraumes des Aufbaus angeordnet werden, wodurch so eine flexible Gestaltung bzw. Aufteilung des Vorraums ermöglicht wird.

In diesem Zusammenhang ist es bevorzugt, das Aussteifungselement im Wesentlichen plattenförmig auszubilden. Ein solches plattenförmiges Aussteifungselement kann zur Ausbildung eines Fachbodens im Vorraum waagrecht angeordnet sein. Um eine den jeweiligen Erfordernissen angemessene Aufteilung des Vorraums zu erreichen, können mehrere plattenförmige Aussteifungselemente vorgesehen sein, die variabel im Vorraum angeordnet werden können. Bevorzugt sind mehrere plattenförmige Aussteifungselemente vorgesehen, die in dem Vorraum einen mehrere Fachböden aufweisenden Stauraum ausbilden.

Zur Definition der sich senkrecht zur Fahrtrichtung erstreckenden Ebene zur Ladungsbegrenzung ist es vorteilhaft, wenn ein im eingebauten Zustand nach hinten zeigender Bereich des mindestens einen Aussteifungselements die sich senkrecht zur Fahrtrichtung erstreckende Ebene zur Ladungsbegrenzung definiert. Mit anderen Worten bilden die Rückseiten der Aussteifungselemente Anschläge für die Ladung aus, so dass die Ladung nur bis zum jeweiligen Anliegen an den Rückseiten der Aussteifungselemente verrutschen kann.

Um die Vorderwand über ihre gesamte Breitenerstreckung hin auszusteifen, liegen die Aussteifungselemente im eingebauten Zustand in einem nach vorne liegenden Bereich an der Innenseite der Vorderwand zumindest teilweise an. Hierdurch kann eine Unterstützung und Abstützung der Vorderwand an den Aussteifungselementen über das ganze Profil der Vorderwand hinweg erreicht werden. Bevorzugt ist dabei der nach vorne zeigende Bereich des mindestens einen Aussteifungselementes im Wesentlichen kreissegmentförmig ausgebildet.

In einer bevorzugten Variante bildet das mindestens eine Aussteifungselement eine Dachplatte oder eine Bodenplatte des Aufbaus aus. Unter Dachplatte wird hierbei eine im Wesentlichen der Oberseite des Aufbaus bzw. dem Dach des Anhängers entsprechende Platte verstanden. Entsprechend wird unter einer Bodenplatte eine den Boden des Anhängers ausbildende Platte verstanden. Der Aufbau nach dieser Variante hat den Vorteil, dass eine Aussteifung der Vorderwand erreicht werden kann, ohne dass das Volumen des Vorraums zwischen der Dachplatte und der Bodenplatte weiter unterteilt wird.

Um den Vorraum von dem eigentlichen Frachtraum des Anhängers zu trennen, kann der Vorraum im Bereich der sich senkrecht zur Fahrtrichtung erstreckenden Ebene zur Ladungsbegrenzung durch eine Wand, eine Türvorrichtung, eine Klappenvorrichtung und/oder eine Rolltorvorrichtung zum Frachtraum hin abgeschlossen sein.

Beim Vorsehen einer Wand kann der Vorraum auch vollkommen gegenüber dem Frachtraum und der Außenseite abgeschlossen sein, also weder von außen noch von innen zugänglich sein. In diesem Fall kann der Aufbau lediglich zur Ladungsbegrenzung nach vorn dienen, ein zugängliches Stauvolumen wird nicht ausgebildet.

Eine wesentliche Gewichtsreduktion des Aufbaus kann dadurch erreicht werden, dass die Vorderwand kohlefaserverstärkten Kunststoff (CFK), glasfaserverstärkten Kunststoff (GFK), Aluminiumlegierungen und/oder andere geeignete Werkstoffe aufweist. Insbesondere bei der Verwendung von kohlefaserverstärkten Kunststoff oder glasfaserverstärkten Kunststoff kann eine wesentliche Gewichtsreduktion erreicht werden, bei gleichzeitig hoher Steifigkeit und Schlaghärte des Aufbaus bzw. der Vorderwand in Verbindung mit einer hohen Korrosionsbeständigkeit und einer einfachen Herstellung durch Formlaminieren.

Gleichermaßen bevorzugt ist es, wenn mindestens ein Aussteifungselement kohlefaserverstärkten Kunststoff (CFK), glasfaserverstärkten Kunststoff (GFK), Aluminiumlegierungen und/oder andere geeignete Werkstoffe aufweist, um die oben genannten Vorteile der Gewichtsreduktion in Kombination mit einer hohen Steifigkeit bzw. Härte zu erreichen.

Die Verwendung dieser Werkstoffe ist besonders bevorzugt, da die Nutzlast des Anhängers durch eine Reduktion des Gewichts des Aufbaus erhöht werden kann. Hierdurch ergeben sich Vorteile bezüglich der Wirtschaftlichkeit des Anhängers und gleichzeitig auch ein geringerer Verschleiß der Verschleißteile sowohl des Anhängers als auch der Zugmaschine bei Leerfahrten, da das Leergewicht des Zuges herabgesetzt ist.

Der Vorraum kann in einer bevorzugten Variante, wenn es sich bei dem Anhänger beispielsweise um einen temperaturgeführten Kofferaufbau handelt, ein Kühlaggregat aufnehmen. Weiterhin kann auch eine Heizanlage in dem Vorraum angeordnet sein. Zur Aussteifung der Vorderwand kann mindestens ein Teil des Kühlaggregats und/oder der Heizanlage gleichzeitig als Aussteifungselement ausgebildet sein.

Weiterhin kann im Vorraum auf der linken und/oder rechten Seite ein Druckluftkessel des Anhängers angeordnet sein. Dabei kann mindestens ein Teil des Druckluftkessels als Aussteifungselement ausgebildet sein. Hierdurch wird erreicht, dass die notwendigen Funktionseinheiten des Anhängers geschützt im Vorraum untergebracht sind und für Wartungszwecke einfach zugänglich sind.

Ein Anhänger, insbesondere ein Sattelanhänger, mit einem Aufbau, wie er oben beschrieben wurde, löst ebenfalls die Aufgabe der Erfindung.

### Kurze Beschreibung der Figuren

- Fig. 1: ist eine perspektivische Vorderansicht eines Aufbaus gemäß einem ersten Ausführungsbeispiel;
- Fig. 2: ist eine perspektivische Rückansicht des Aufbaus des ersten Ausführungsbeispiels gemäß Fig. 1;
- Fig. 3: ist eine perspektivische Vorderansicht eines Aufbaus in einem zweiten Ausführungsbeispiel;
- Fig. 4: ist eine perspektivische Rückansicht des zweiten Ausführungsbeispiels gemäß Fig. 3;
- Fig. 5: ist eine perspektivische Vorderansicht eines Aufbaus gemäß einem dritten Ausführungsbeispiel;
- Fig. 6: ist eine Rückansicht des Aufbaus gemäß der Fig. 5; und
- Fig. 7: ist eine schematische Seitenansicht eines Sattelanhängers mit einem Aufbau.

### Detaillierte Beschreibung der Figuren

In den folgenden Figuren werden gleiche Elemente des Aufbaus mit gleichen Bezugszeichen bezeichnet.

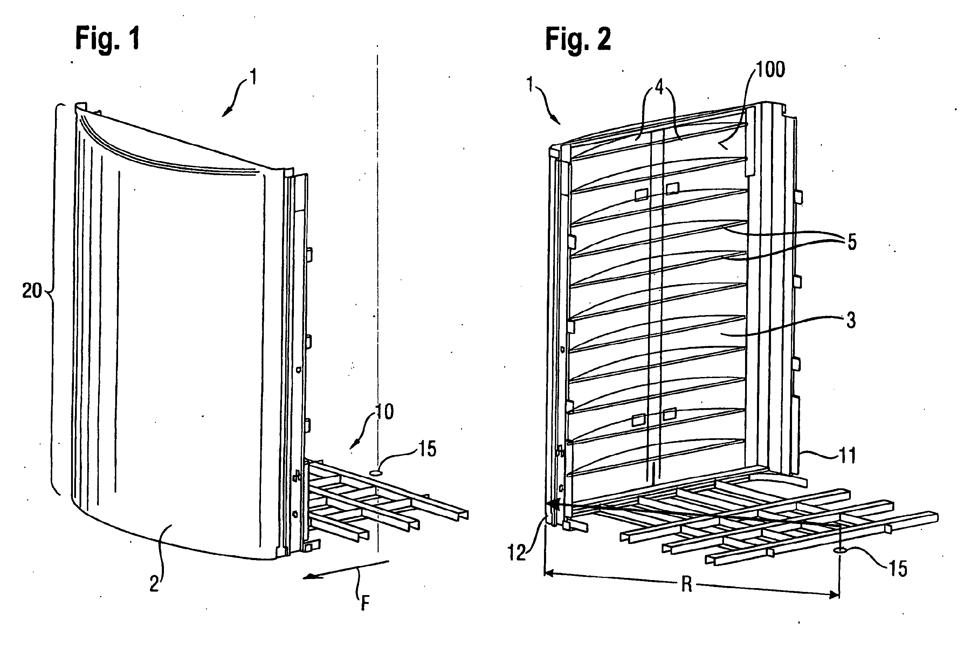

In den Figuren 1 und 2 ist ein erstes Ausführungsbeispiel eines Aufbaus 1 eines Sattelanhängers 10 gezeigt. In der perspektivischen Vorderansicht der Fig. 1 ist die Vorderwand 2 zu erkennen, die in dem gezeigten Ausführungsbeispiel einen gewölbten Bereich 20 zeigt, der im Wesentlichen eine zylinderabschnittsförmige Form aufweist. Der gewölbte Bereich 20 erstreckt dabei sich über die gesamte Höhe des Aufbaus. Der Radius R des Zylinderabschnitts erstreckt sich dabei von einer Achse, die durch den Mittelpunkt eines Königszapfens 15 des Sattelanhängers 10 hindurchgeht, in Richtung der Vorderwand 2.

Bei einem hier nicht gezeigten Anhänger, dessen Vorderachsen an einem Drehgestell angeordnet sind, erstreckt sich der Radius entsprechend von der vertikalen Drehachse des Drehgestells aus.

Mit anderen Worten geht die Außenkontur der Vorderwand 2 nicht über eine Hüllkurve hinaus, die in einem festgelegten Radius R um den Mittelpunkt des Königszapfens 15 des Sattelanhängers 10 herumgelegt ist. Der Radius R beträgt im gezeigten Beispiel 2040 mm.

Der Aufbau 1 weist weiterhin eine Ebene 100 zur Ladungsbegrenzung auf, die sich senkrecht zur Fahrtrichtung F erstreckt. Die Ebene 100 zur Ladungsbegrenzung dient dazu, üblicherweise in den Frachtraum des Sattelanhängers 10 hineingeladenen Frachtpaletten nach vorne hin abzustützen. Da die Ladung üblicherweise auf rechteckigen Ladungsträgern geliefert wird, liegt die Ebene 100 zur Ladungsbegrenzung senkrecht zur Fahrtrichtung und ist plan. Der gewölbte Bereich 20 der Vorderwand 2 erstreckt sich von dieser Ebene 100 zur Ladungsbegrenzung in Fahrtrichtung nach vorne hin. Entsprechend ist zwischen der Ebene zur Ladungsbegrenzung 100 und dem gewölbten Bereich 20 der Vorderwand 2 ein Vorraum 3 ausgebildet, der von der Innenkontur des gewölbten Bereichs 20 der Vorderwand 2 und der Ebene 100 zur Ladungsbegrenzung definiert ist.

Die Ebene 100 zur Ladungsbegrenzung muss nicht zwangsläufig eine durchgehende Fläche sein, sondern kann auch durch hervorstehende Stoppelement zur Abstützung der Ladung ausgebildet sein. Unter der Ebene 100 zur Ladungsbegrenzung wird daher eine gedachte Ebene verstanden, die durch die am weitesten nach hinten in den Frachtraum hineinragenden Abstützungselement zur Ladungsabstützung definiert wird. Im hier gezeigten Ausführungsbeispiel ist die Ebene 100 zur Ladungsbegrenzung jedoch durch zwei feste Türflügel 4 ausgebildet und daher als durchgängige Fläche, an die Ladung anliegen kann.

In dem Vorraum 3 zwischen der Ebene 100 zur Ladungsbegrenzung, bzw. den Flügeltüren 4 und der Innenkontur des gewölbten Bereichs 20 der Vorderwand 2 sind Aussteifungselemente 5 angeordnet. Die Aussteifungselemente 5 sind in dem gezeigten Ausführungsbeispiel kreissegmentförmig ausgebildet, so dass sie an der Innenkontur des gewölbten Bereichs 20 der Vorderwand 2 mit ihrer Vorderseite vollständig anliegen. Der nach hinten zeigende Bereich der Aussteifungselemente 5 definiert eine Anlageebene, an welche die Flügeltür 4, die ihrerseits die Ebene 100 zur Ladungsbegrenzung ausbildet, anliegt.

Die Aussteifungselemente 5 sind, wie in Fig. 2 durch die im Wesentlichen transparent gezeichnete Flügeltür 4 hindurchzusehen ist, in einer Konfiguration angeordnet, in der sie im Wesentlichen Fachböden ausbilden, so dass auf den Aussteifungselementen Gegenstände gelagert werden können. Diese Anordnung der Aussteifungselemente 5 hat nicht nur den Vorteil, dass hier eine Lagerung von Kleinteilen oder anderen Gegenständen vorgenommen werden kann, sondern stellt auf der anderen Seite eine vollständige Aussteifung des gewölbten Bereichs 20 und damit der Vorderwand 2 sicher, so dass die Vorderwand 2 die Anforderungen gemäß EN ISO 12646 XL erfüllt.

In dem gezeigten ersten Ausführungsbeispiel der Figuren 1 und 2 ist die Vorderwand 2 entweder aus glasfaserverstärktem Kunststoff (GFK) oder kohlefaserverstärktem Kunststoff (CFK) ausgebildet, um hier eine besonders leichte Bauform zu erhalten. Die Aussteifungselemente 5 sind ebenfalls aus GFK oder CFK ausgebildet.

Die Vorderwand 2 erstreckt sich von der rechten Seitenwand 11 bis zur linken Seitenwand 12 des Anhängers 10. Hierdurch wird sichergestellt, dass der gesamte vorgegebene Bereich vor der Ebene 100 zur Ladungsbegrenzung durch den Aufbau 1 ausgenutzt werden kann.

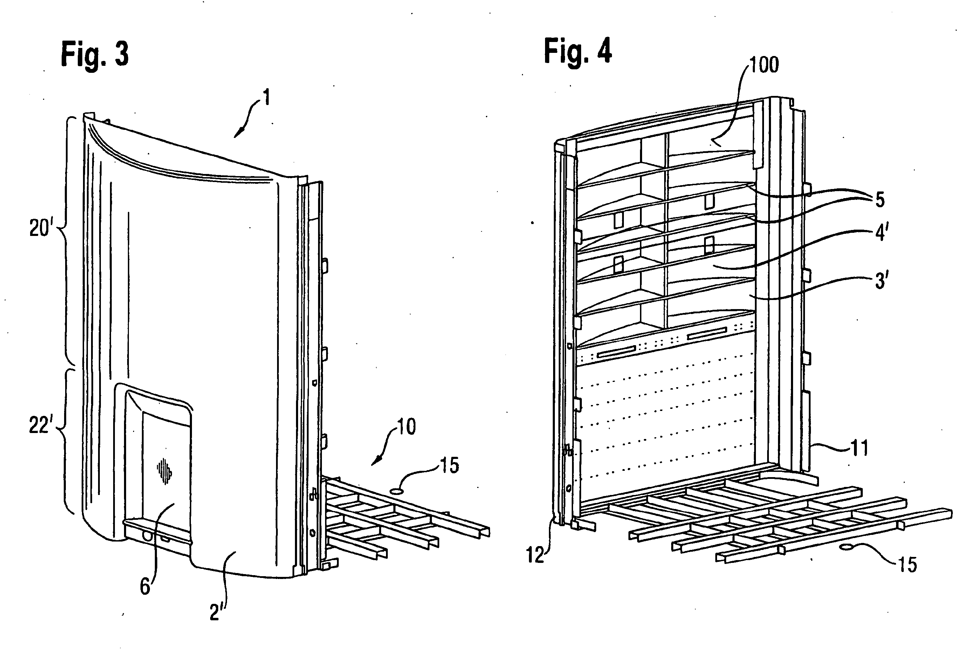

In dem zweiten Ausführungsbeispiel, das in Figuren 3 und 4 gezeigt ist, ist ebenfalls ein Aufbau 1 für einen Sattelanhänger 10 gezeigt, der eine Vorderwand 2' aufweist. Die Vorderwand 2' hat in dem gezeigten Ausführungsbeispiel wiederum einen gewölbten Bereich 20' mit einer im Wesentlichen zylindersegmentförmige Außenkontur. Im unteren Bereich 22' weist die Vorderwand 2' jedoch eine Mulde 6 auf. Die Bereiche der Vorderwand 2, die neben der Mulde 6 liegen, weisen ebenfalls die zylindersegmentförmige Außenkontur auf, wie im gewölbten Bereich 20'.

Die Mulde 6 der Vorderwand 2' dient dazu, Betriebsvorrichtungen, insbesondere Druckluftanschlüsse, Stromanschlüsse und/oder Feuerlöscher auf der Außenseite der Vorderwand 2' anzuordnen. Diese Betriebsvorrichtungen liegen dann immer noch innerhalb der vorgegebenen Hüllkurve um den Königszapfen 15 herum.

In Fig. 4 ist zu sehen, dass die Ebene 100 zur Ladungsbegrenzung in dem Ausführungsbeispiel der Fig. 4 durch eine Rolltorvorrichtung 4' ausgebildet wird. Die Rolltorvorrichtung 4' verschließt den Vorraum 3, der wiederum zwischen dem gewölbten Bereich 20' der Vorderwand 2' und der Ebene 100 zur Ladungsbegrenzung ausgebildet wird.

In dem zweiten gezeigten Ausführungsbeispiel der Figuren 3 und 4 sind die Aussteifungselemente 5 wiederum in einer Struktur angeordnet, die der des ersten Ausführungsbeispiels ähnlich ist. Insbesondere sind die Aussteifungselemente 5 auf ihrer Vorderseite kreissegmentförmig ausgebildet und definieren auf ihrer Rückseite im Wesentlichen die Ebene 100 zur Ladungsbegrenzung.

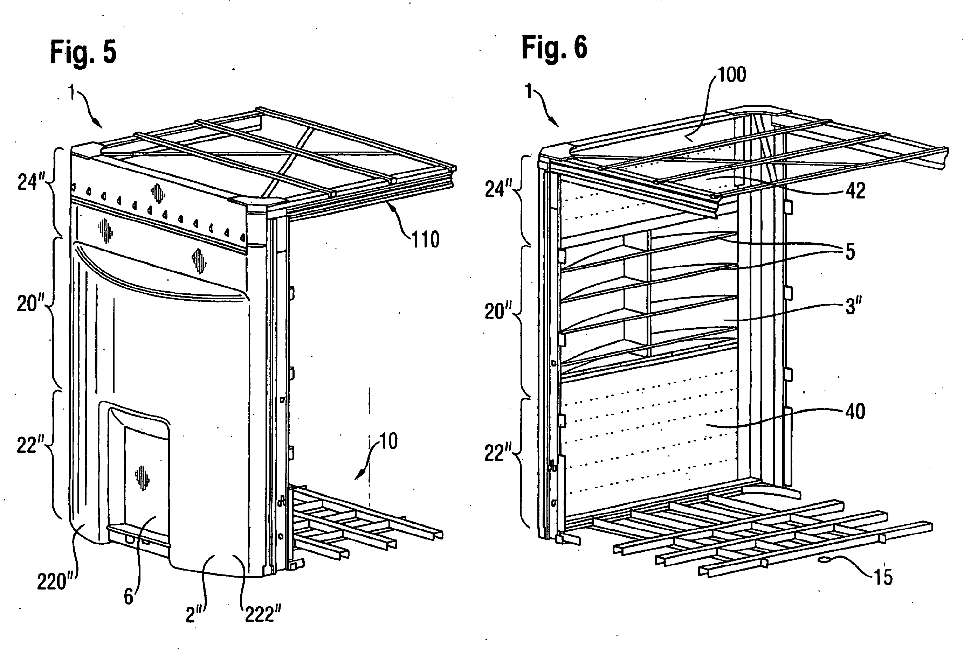

In den Figuren 5 und 6 ist ein Aufbau 1 für einen Sattelanhänger 10 gemäß einem dritten Ausführungsbeispiel gezeigt. Die Vorderwand 2'' ist hier in einer weiteren Variante derart geformt, dass sie einen gewölbten Bereich 20 ' ' aufweist, der ungefähr im mittleren Bereich der Höhenausdehnung der Vorderwand 2'' vorgesehen ist. Der gewölbte Bereich 20' ' der Vorderwand 2'' ist ebenfalls als Zylindersegmentabschnitt ausgebildet, der sich um den Königszapfen 15 herum erstreckt.

Im unteren Bereich 22'' der Vorderwand 2'' ist, ähnlich wie im zweiten Ausführungsbeispiel, eine Mulde 6 zur Aufnahme von Betriebsvorrichtungen vorgesehen. In den gewölbten Bereichen 220'' und 222'', die links und rechts der Mulde 6 in der Vorderwand angeordnet sind, ergeben sich in Kombination mit der Ebene 100 zur Ladungsbegrenzung kleine Hohlräume, die beispielsweise zur Aufnahme von Druckluftzylindern oder anderen Betriebsvorrichtungen des Anhängers 10 verwendet werden können.

Die Vorderwand 2'' weist weiterhin einen dritten Abschnitt 24 " auf, der in der Höhenausdehnung der Vorderwand 2'' in der obersten Position angeordnet ist. Der dritte Abschnitt 24 ' ' ist im Wesentlichen eben ausgebildet.

In dem Ausführungsbeispiel der Figuren 5 und 6 ist weiterhin eine Dachkonstruktion 110 gezeigt, die in üblicher Art und Weise ausgebildet ist. Die Dachkonstruktion 110 koppelt an den dritten Abschnitt 24'' der Vorderwand 2'' an und bildet mit dieser zusammen eine stabile Einheit für den Anhänger eines Lastkraftwagens 10 aus.

Wie in Fig. 6 zu sehen ist, ist im Bereich des zweiten Bereichs 22'' auf der unteren Seite der Vorderwand 2'' eine Rückwand vorgesehen, welche die Ebene 100 zur Ladungsbegrenzung ausbildet. Auch im dritten Bereich 24'', der an der oberen Seite der Vorderwand 2" angeordnet ist, ist eine Rückwand 42 vorgesehen, welche die Ebene 100 zur Ladungsbegrenzung ausbildet. Die beiden Rückwände 40, 42 sind fest verschlossen.

Im gewölbten Bereich 20'' der Vorderwand 2'' ist ein zum Frachtraum des Anhängers 10 hin offener Vorraum 3'' ausgebildet, in dem Aussteifungselemente 5 angeordnet sind. Die Aussteifungselemente 5 sind wiederum kreissegmentförmig ausgebildet und ihre Rückseite definiert die Ebene 100 zur Ladungsbegrenzung.

Im Beispiel der Figuren 5 und 6 sind die Aussteifungselemente 5 innerhalb des Vorraums 3'' variabel einsetzbar, so dass die Aussteifungselemente 5 in der Art von Regalböden innerhalb des Vorraums 3'' variabel eingesetzt werden können. Es ist jedoch eine festgelegte Anzahl von Aussteifungselementen 5 erforderlich, um die Steifigkeit des Aufbaus 1 derart zu gewährleisten, dass eine Ladungssicherheit gemäß EN ISO 12642 XL gewährleistet ist.

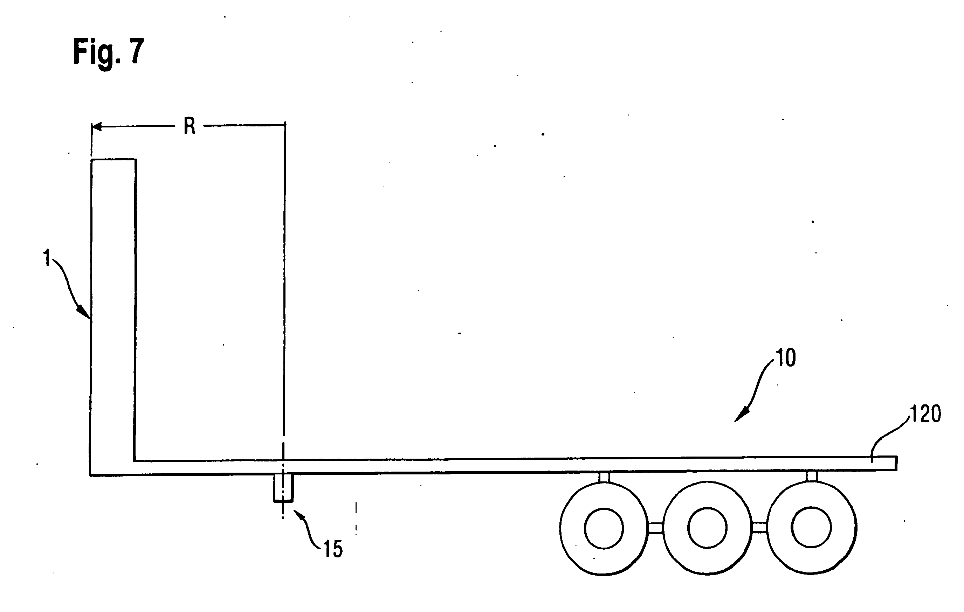

Fig. 7 zeigt schematisch einen Sattelanhänger 10 mit einem Aufbau 1. Der Aufbau 1 ist am vorderen Ende des Sattelanhängers 10 angeordnet und bildet die vordere Begrenzung für die Ladung aus. Ein Königszapfen 15 ist unter dem Boden 120 des Sattelanhängers 10 vorgesehen, um den Anhänger eines Lastkraftwagens 10 auf eine Zugmaschine aufzusatteln. Ein Radius R nach vorne, der um eine durch den Königszapfen 15 hindurchgehende Achse gebildet ist, wird nicht überschritten. Der Radius R beträgt in dem gezeigten Ausführungsbeispiel 2040 mm.

In einem hier nicht gezeigten Ausführungsbeispiel, bei dem die Vorderachsen des Anhängers an einem Drehgestell angeordnet sind, erstreckt sich der Radius entsprechend von der vertikalen Drehachse der Anbindung des Drehgestells an das übrige Fahrgestell aus.

Unterschiedliche weitere Ausführungsbeispiele der Erfindung sind denkbar. Wesentlich ist, dass vor der Ebene zur Ladungsbegrenzung bei einem Anhänger eines Lastkraftwagens eine Vorderwand angeordnet ist, die zumindest einen gewölbten Bereich aufweist, wobei zwischen der Ebene zur Lastenbegrenzung und dem gewölbten Bereich der Vorderwand ein Vorraum definiert ist, in dem mindestens ein Aussteifungselement zur Aussteifung der Vorderwand angeordnet ist.

## Patentansprüche

1. Aufbau (1) für einen Anhänger eines Lastkraftwagens, insbesondere eines Sattelanhängers (10), wobei der Aufbau im in Fahrtrichtung (F) vorderen Bereich des Anhängers angeordnet ist und eine sich senkrecht zur Fahrtrichtung erstreckende Ebene (100) zur Ladungsbegrenzung nach vorn definiert,
**dadurch gekennzeichnet,**
**dass** vor der Ebene zur Ladungsbegrenzung eine Vorderwand (2, 2', 2") angeordnet ist, die zumindest einen gewölbten Bereich (20, 20', 20") aufweist, wobei zwischen der Ebene zur Ladungsbegrenzung und dem gewölbten Bereich der Vorderwand ein Vorraum (3, 3") definiert ist, in dem mindestens ein Aussteifungselement (5) zur Aussteifung der Vorderwand angeordnet ist, wobei ein im eingebauten Zustand nach hinten zeigender Bereich des mindestens einen Aussteifungselements die sich senkrecht zur Fahrtrichtung erstreckende Ebene zur Ladungsbegrenzung definiert.

2. Aufbau gemäß Anspruch 1, **dadurch gekennzeichnet, dass** der gewölbte Bereich konvex ist.

3. Aufbau gemäß Anspruch 1 oder 2, **dadurch gekennzeichnet, dass** der gewölbte Bereich einen Zylinderabschnitt ausbildet, wobei sich die Zylinderachse des Aufbaus im Betriebszustand vertikal erstreckt.

4. Aufbau gemäß einem der vorstehenden Ansprüche, **dadurch gekennzeichnet, dass** der gewölbte Bereich mehrere Flächen aufweist.

5. Aufbau gemäß Anspruch 4, **dadurch gekennzeichnet, dass** der gewölbte Bereich mindestens eine ebene Fläche aufweist.

6. Aufbau gemäß Anspruch 4 oder 5, **dadurch gekennzeichnet, dass** der gewölbte Bereich mindestens entweder eine beliebig geformte Fläche, eine gebogene und/oder eine wellenförmige Fläche aufweist.

7. Aufbau gemäß einem der vorstehenden Ansprüche, **dadurch gekennzeichnet, dass** sich der gewölbte Bereich über die gesamte Höhe der Vorderwand (2) erstreckt.

8. Aufbau gemäß einem der Ansprüche 1 bis 6, **dadurch gekennzeichnet, dass** der gewölbte Bereich nur in einem Abschnitt der Vorderwand (2', 2") vorgesehen ist.

9. Aufbau gemäß einem der vorstehenden Ansprüche, **dadurch gekennzeichnet, dass** die Außenseite der Vorderwand um höchstens einen definierten Radius (R) von einer sich durch die Mitte eines Königszapfens (15) eines Sattelanhängers und/oder vertikaler Drehachse eines Drehgestells eines Anhängers erstreckenden Achse entfernt ist.

10. Aufbau gemäß Anspruch 9, **dadurch gekennzeichnet, dass** der Radius 2040mm ist.

11. Aufbau gemäß einem der vorstehenden Ansprüche, **dadurch gekennzeichnet, dass** sich der gewölbte Bereich der Vorderwand von einer Seitenwand (11) des Anhängers zur anderen Seitenwand (12) erstreckt.

12. Aufbau gemäß einem der vorstehenden Ansprüche, **dadurch gekennzeichnet, dass** die Vorderwand mindestens eine Öffnung zum Zugang zum Vorraum aufweist.

13. Aufbau gemäß einem der Ansprüche 1 bis 11, **dadurch gekennzeichnet, dass** der Vorraum vollständig abgeschlossen ist.

14. Aufbau gemäß einem der vorstehenden Ansprüche, **dadurch gekennzeichnet, dass** in dem gewölbten Bereich mindestens eine Mulde (6) zur Aufnahme von Betriebsvorrichtungen, Druckluftanschlüssen, Stromanschlüssen und/oder Feuerlöschern, angeordnet ist.

15. Aufbau gemäß einem der vorstehenden Ansprüche, **dadurch gekennzeichnet, dass** der Aufbau gemäß EN ISO 12642 XL dimensioniert ist.

16. Aufbau gemäß einem der vorstehenden Ansprüche, **dadurch gekennzeichnet, dass** mindestens eines der Aussteifungselemente fest mit der Vorderwand verbunden ist.

17. Aufbau gemäß einem der vorstehenden Ansprüche, **dadurch gekennzeichnet, dass** mindestens eines der Aussteifungselemente mit der Vorderwand fest verriegelbar ist.

18. Aufbau gemäß einem der vorstehenden Ansprüche, **dadurch gekennzeichnet, dass** das Aussteifungselement plattenförmig ausgebildet ist.

19. Aufbau gemäß Anspruch 18, **dadurch gekennzeichnet, dass** das plattenförmige Aussteifungselement zur Ausbildung eines Fachbodens waagerecht angeordnet ist.

20. Aufbau gemäß Anspruch 18 oder 19, **dadurch gekennzeichnet, dass** mehrere plattenförmige Aussteifungselemente vorgesehen sind, die variabel im Vorraum angeordnet werden können.

21. Aufbau gemäß einem der Ansprüche 18 bis 20, **dadurch gekennzeichnet, dass** mehrere plattenförmige Aussteifungselemente vorgesehen sind, die in dem Vorraum einen mehrere Fachböden aufweisenden Stauraum ausbilden.

22. Aufbau gemäß einem der vorstehenden Ansprüche, **dadurch gekennzeichnet, dass** ein im eingebauten Zustand nach vorne zeigender Bereich des mindestens einen Aussteifungselements an der Innenseite der Vorderwand zumindest teilweise anliegt.

23. Aufbau gemäß Anspruch 22, **dadurch gekennzeichnet, dass** der nach vorne zeigende Bereich kreissegmentförmig ausgebildet ist.

24. Aufbau gemäß einem der vorstehenden Ansprüche, **dadurch gekennzeichnet, dass** der Vorraum im Bereich der sich senkrecht zur Fahrtrichtung erstreckende Ebene zur Ladungsbegrenzung durch eine Wand (40), eine Türvorrichtung (4), eine Klappenvorrichtung und/oder eine Rolltorvorrichtung (4') zum Frachtraum hin abgeschlossen wird.

25. Aufbau gemäß einem der vorstehenden Ansprüche, **dadurch gekennzeichnet, dass** die Vorderwand kohlefaserverstärkten Kunststoff (CFK)und/oder glasfaserverstärkten Kunststoff (GFK) aufweist.

26. Aufbau gemäß einem der vorstehenden Ansprüche, **dadurch gekennzeichnet, dass** die Vorderwand Aluminiumlegierungen aufweist.

27. Aufbau gemäß einem der vorstehenden Ansprüche, **dadurch gekennzeichnet, dass** mindestens ein Aussteifungselement kohlefaserverstärkten Kunststoff (CFK) und/oder glasfaserverstärkten Kunststoff (GFK) aufweist.

28. Aufbau gemäß einem der vorstehenden Ansprüche, **dadurch gekennzeichnet, dass** mindestens ein Aussteifungselement Aluminiumlegierungen aufweist.

29. Aufbau gemäß einem der vorstehenden Ansprüche, **dadurch gekennzeichnet, dass** in dem Vorraum ein Kühlaggregat und/oder eine Heizanlage angeordnet ist.

30. Aufbau gemäß Anspruch 29, **dadurch gekennzeichnet, dass** mindestens ein Teil des Kühlaggregats und/oder der Heizanlage als Aussteifungselement ausgebildet sind.

31. Aufbau gemäß einem der vorstehenden Ansprüche, **dadurch gekennzeichnet, dass** mindestens ein Druckluftkessel im Vorraum auf der linken und/oder rechten Seite angeordnet ist.

32. Aufbau gemäß Anspruch 31, **dadurch gekennzeichnet, dass** mindestens ein Teil des Druckluftkessels als Aussteifungselement ausgebildet ist.

33. Anhänger eines Lastkraftwagens, insbesondere Sattelanhänger, mit einem Aufbau gemäß einem der vorstehenden Ansprüche.

## Claims

1. Structure (1) for a trailer of a heavy goods vehicle, in particular a fifth-wheel trailer (10), wherein the structure is arranged in the region of the trailer which is in front in travel direction (F) and defines a plane (100) extending vertically to the travel direction for load limitation towards the front, **characterised in that** a front wall (2, 2', 2"), which has at least one arched region (20, 20', 20"), is arranged in front of the plane for load limitation, wherein between the plane for load limitation and the arched region of the front wall, an ante-chamber (3, 3") is defined in which at least one strengthening element (5) to strengthen the front wall is arranged, wherein a region pointing backwards in the installed state of the at least one strengthening element defines the plane extending vertically to the travel direction for load limitation.

2. Structure according to claim 1, **characterised in that** the arched region is convex.

3. Structure according to claim 1 or 2, **characterised in that** the arched region forms a cylindrical section, wherein the cylindrical axis of the structure extends vertically in the operational state.

4. Structure according to one of the above claims, **characterised in that** the arched region has several surfaces.

5. Structure according to claim 4, **characterised in that** the arched region has at least one flat surface.

6. Structure according to claim 4 or 5, **characterised in that** the arched region has at least either a surface of any shape, a curved surface and/or a corrugated surface.

7. Structure according to one of the above claims, **characterised in that** the arched region extends over the entire height of the front wall (2).

8. Structure according to one of claims 1 to 6, **characterised in that** the arched region is provided only in one section of the front wall (2', 2'').

9. Structure according to one of the above claims, **characterised in that** the outer side of the front wall is remote from an axis extending through the centre of a kingpin (15) of a fifth-wheel trailer and/or vertical axis of rotation of a pivot mounting of a trailer by at the most one defined radius (R).

10. Structure according to claim 9, **characterised in that** the radius is 2,040 mm.

11. Structure according to one of the above claims, **characterised in that** the arched region of the front wall extends from a side wall (11) of the trailer to the other side wall (12).

12. Structure according to one of the above claims, **characterised in that** the front wall has at least one opening for access to the ante-chamber.

13. Structure according to one of claims 1 to 11, **characterised in that** the ante-chamber is completely closed.

14. Structure according to one of the above claims, **characterised in that** at least one depression (6) to accommodate operating devices, compressed-air connections, current connections and/or fire extinguishers, is arranged in the arched region.

15. Structure according to one of the above claims, **characterised in that** the structure has dimensions according to EN ISO 12 642 XL.

16. Structure according to one of the above claims, **characterised in that** at least one of the strengthening elements is firmly connected to the front wall.

17. Structure according to one of the above claims, **characterised in that** at least one of the strengthening elements can be firmly locked to the front wall.

18. Structure according to one of the above claims, **characterised in that** the strengthening element is designed like a panel.

19. Structure according to claim 18, **characterised in that** the panel-like strengthening element is arranged horizontally to form a shelf base.

20. Structure according to claim 18 or 19, **characterised in that** several panel-like strengthening elements are provided which may be arranged in variable manner in the ante-chamber.

21. Structure according to one of claims 18 to 20, **characterised in that** several panel-like strengthening elements are provided which form a storage chamber having several shelf bases in the ante-chamber.

22. Structure according to one of the above claims, **characterised in that** a region pointing forwards in the installed state of the at least one strengthening element rests at least partly on the inner side of the front wall.

23. Structure according to claim 22, **characterised in that** the region pointing forwards is designed to be like a segment of a circle.

24. Structure according to one of the above claims, **characterised in that** the ante-chamber in the region of the plane extending vertically to the travel direction for load limitation is closed by a wall (40), a door device (4), a shutter device and/or a sliding-door device (4') towards the freight chamber.

25. Structure according to one of the above claims, **characterised in that** the front wall has carbon fibre-reinforced plastic (CFP) and/or glass fibre-reinforced plastic (GFP).

26. Structure according to one of the above claims, **characterised in that** the front wall has aluminium alloys.

27. Structure according to one of the above claims, **characterised in that** at least one strengthening element has carbon fibre-reinforced plastic (CFP) and/or glass fibre-reinforced plastic (GFP).

28. Structure according to one of the above claims, **characterised in that** at least one strengthening element has aluminium alloys.

29. Structure according to one of the above claims, **characterised in that** a cooling unit and/or a heating plant is arranged in the ante-chamber.

30. Structure according to claim 29, **characterised in that** at least one part of the cooling unit and/or the heating plant are designed as the strengthening element.

31. Structure according to one of the above claims, **characterised in that** at least one compressed-air vessel is arranged in the ante-chamber on the left-hand and/or right-hand side.

32. Structure according to claim 31, **characterised in that** at least one part of the compressed-air vessel is designed as the strengthening element.

33. Trailer of a heavy goods vehicle, in particular fifth-wheel trailer, having a structure according to one of the above claims.

## Revendications

1. Montage (1), pour une remorque d'un camion, en particulier d'une remorque semi-portée (10), le montage étant disposé dans la zone de la remorque située à l'avant, en observant dans la direction de roulage (F), et définit un plan (100), s'étendant perpendiculairement à la direction de roulage, pour la délimitation de chargement vers l'avant,
**caractérisé en ce que**,
devant le plan servant à la délimitation de chargement est disposée une paroi avant (2, 2', 2) présentant au moins une zone (20, 20', 20") incurvée, sachant qu'entre le plan servant à la délimitation de chargement et la zone incurvée de la paroi avant est défini un espace avant (3, 3"), dans lequel est disposé au moins un élément d'étaiement (5), servant à rigidifier la paroi avant, une zone, tournée vers l'arrière à l'état monté, du au moins un élément d'étaiement définissant le plan, s'étendant perpendiculairement à la direction de roulage, pour la délimitation de chargement.

2. Montage selon la revendication 1, **caractérisé en ce que** la zone incurvée est convexe.

3. Montage selon la revendication 1 ou 2, **caractérisé en ce que** la zone incurvée constitue un tronçon de cylindre, l'axe de cylindre du montage s'étendant verticalement, à l'état de fonctionnement.

4. Montage selon l'une des revendications précédentes, **caractérisé en ce que** la zone incurvée présente plusieurs faces.

5. Montage selon la revendication 4, **caractérisé en ce que** la zone incurvée présente au moins une face plane.

6. Montage selon la revendication 4 ou 5, **caractérisé en ce que** la zone incurvée présente au moins soit une face de forme quelconque, un face incurvée et/ou ondulée.

7. Montage selon l'une des revendications précédentes, **caractérisé en ce que** la zone incurvée s'étend sur toute la hauteur de la paroi avant (2).

8. Montage selon l'une des revendications 1 à 6, **caractérisé en ce que** la zone incurvée est prévue seulement dans un tronçon de la paroi avant (2', 2").

9. Montage selon l'une des revendications précédentes, **caractérisé en ce que** la face extérieure de la paroi avant est éloignée, au maximum de la valeur d'un rayon (R) défini, d'un axe passant par le centre d'un pivot central (15) d'une remorque semi-portée et/ou d'un axe de rotation vertical d'une plaque tournante d'une remorque.

10. Montage selon la revendication 9, **caractérisé en ce que** le rayon est de 2040 mm.

11. Montage selon l'une des revendications précédentes, **caractérisé en ce que** la zone incurvée de la paroi avant s'étend d'une paroi latérale (11) de la remorque à l'autre paroi latérale (12).

12. Montage selon l'une des revendications précédentes, **caractérisé en ce que** la paroi avant présente au moins une ouverture pour l'accès à l'espace avant.

13. Montage selon l'une des revendications 1 à 11, **caractérisé en ce que** l'espace avant est complètement fermé.

14. Montage selon l'une des revendications précédentes, **caractérisé en ce que**, dans la zone incurvée, est disposée au moins une auge (6) servant à recevoir des dispositifs de fonctionnement, des raccordements d'air comprimé, des raccordement électriques et/ou des extincteurs d'incendie.

15. Montage selon l'une des revendications précédentes, **caractérisé en ce que** le montage est dimensionné selon EN ISO 12642 XL.

16. Montage selon l'une des revendications précédentes, **caractérisé en ce qu'**au moins l'un des éléments d'étaiement est relié rigidement à la paroi avant.

17. Montage selon l'une des revendications précédentes, **caractérisé en ce qu'**au moins l'un des éléments d'étaiement est susceptible d'être verrouillé rigidement à la paroi avant.

18. Montage selon l'une des revendications précédentes, **caractérisé en ce que** l'élément d'étaiement est réalisé en forme de plaque.

19. Montage selon la revendication 18, **caractérisé en ce que** l'élément d'étaiement en forme de plaque est disposé horizontalement, pour constituer une tablette.

20. Montage selon la revendication 18 ou 19, **caractérisé en ce que** plusieurs éléments d'étaiement en forme de plaque sont prévus, pouvant être disposés de manière variable dans l'espace avant.

21. Montage selon l'une quelconque des revendications 18 à 20, **caractérisé en ce que** plusieurs éléments d'étaiement en forme de plaque sont prévus, constituant dans l'espace avant un espace de rangement présentant plusieurs tablettes.

22. Montage selon l'une des revendications précédentes, **caractérisé en ce qu'**une zone, tournée vers l'avant à l'état monté, du au moins un élément d'étaiement appuie au moins partiellement sur la face intérieure de la paroi avant.

23. Montage selon la revendication 22, **caractérisé en ce que** la zone tournée vers l'avant est conformée en segment de cercle.

24. Montage selon l'une des revendications précédentes, **caractérisé en ce que**, dans la zone du plan, s'étendant perpendiculairement à la direction de roulage, faisant office de délimitation de chargement, l'espace avant est fermé par rapport à l'espace réservé au fret, par une paroi (40), un dispositif à porte (4), un dispositif à volet et/ou un dispositif à porte roulante (4').

25. Montage selon l'une des revendications précédentes, **caractérisé en ce que** la paroi avant présente une matière synthétique renforcée par des fibres de carbone (CFK) et/ou une matière synthétique renforcée par des fibres de verre (GFK).

26. Montage selon l'une des revendications précédentes, **caractérisé en ce que** la paroi avant présente des alliages d'aluminium.

27. Montage selon l'une des revendications précédentes, **caractérisé en ce qu'**au moins un élément d'étaiement présente une matière synthétique renforcée par des fibres de carbone (CFK) et/ou une matière synthétique renforcée par des fibres de verre (GFK).

28. Montage selon l'une des revendications précédentes, **caractérisé en ce qu'**au moins un élément d'étaiement présente des alliages d'aluminium.

29. Montage selon l'une des revendications précédentes, **caractérisé en ce qu'**un groupe de refroidissement et/ou une installation de chauffage est/sont disposé(s) dans l'espace avant.

30. Montage selon la revendication 29, **caractérisé en ce qu'**au moins une partie du groupe de refroidissement et/ou de l'installation de chauffage est réalisée sous forme d'élément d'étaiement.

31. Montage selon l'une des revendications précédentes, **caractérisé en ce qu'**au moins un réservoir à air comprimé est disposé dans l'espace avant, sur le côté gauche et/ou droit.

32. Montage selon la revendication 31, **caractérisé en ce qu'**au moins une partie du réservoir à air comprimé est réalisée sous forme d'élément d'étaiement.

33. Remorque d'un camion, en particulier remorque semi-portée, avec un montage selon l'une des revendications précédentes.
